# EUROPÄISCHE PATENTSCHRIFT

(11) **EP 0 979 158 B1**
(45) Veröffentlichungstag und Bekanntmachung des Hinweises auf die Patenterteilung: **27.02.2002**
(21) Anmeldenummer: 98925429.7
(22) Anmeldetag: 24.03.1998
(51) Int. Cl.: B23Q 3/10, B25B 11/00

(54) **VORRICHTUNG ZUM BEFESTIGEN VON BAUELEMENTEN**
DEVICE FOR FIXING COMPONENTS
DISPOSITIF POUR FIXER DES ELEMENTS CONSTITUTIFS

(30) Priorität: 07.04.1997 DE 19714192
(43) Veröffentlichungstag der Anmeldung: 16.02.2000
(73) Patentinhaber: ROBERT BOSCH GMBH, 70442 Stuttgart (DE)
(72) Erfinder: KOBAN, Johannes, D-70178 Stuttgart (DE); KLEMD, Olaf, D-71706 Markgroeningen (DE)
(86) Internationale Anmeldenummer: DE9800844
(87) Internationale Veröffentlichungsnummer: WO9845084

(56) Entgegenhaltungen:
- EP-A- 0 645 215
- DE-A- 4 132 655
- DE-B- 1 115 199
- DE-U- 9 313 767
- GB-A- 776 350
- US-A- 5 025 834
- US-A- 5 107 897

## Beschreibung

Die Erfindung geht aus von einer Vorrichtung zum Befestigen von Bauelementen nach der Gattung des Anspruchs 1.

Aus der EP 0 645 215 B1 ist schon eine Befestigungsplatte bekannt, die sich mittels Kupplungseinrichtungen mit zusätzlichen Befestigungsplatten verbinden läßt. Die Kupplungseinrichtungen sind in Nuten verankert, die an den längsseitigen Stirnflächen der Befestigungsplatten ausgebildet sind. Weiterhin sieht die EP 0 645 215 B1 die Montage der Befestigungsplatten an Tragstrukturen mittels Befestigungsschrauben und Befestigungswinkeln vor. Die Befestigungswinkel sind zuerst mit Schrauben an den Befestigungsplatten zu befestigen. Dabei müssen die auf der Tragstruktur anzubringenden Schenkel der Befestigungswinkel so ausgerichtet werden, daß sie auf der Tragstruktur aufliegen. Dies ist notwendig, damit beim Anziehen der Befestigungsschrauben keine Verspannungen zwischen den Befestigungsplatten, den Befestigungswinkeln und der Tragstruktur hervorgerufen werden. Somit ist die Aneinanderreihung von Befestigungsplatten und die Montage an eine Tragstruktur relativ aufwendig und erfordert viele Teile.

Aufgabe der vorliegenden Erfindung ist es, eine Vorrichtung der eingangs erwähnten Art derart weiterzubilden, daß die Befestigungsplatten einfacher zu montieren und steif verbindbar sind. Gelöst wird diese Aufgabe mit den Merkmalen des Anspruchs 1.

Die erfindungsgemäße Vorrichtung zum Befestigen von Bauelementen mit den kennzeichnenden Merkmalen des Anspruchs 1 hat den Vorteil, daß kostengünstige, im Strangpreßverfahren hergestellte Prafilstäbe verwendet werden können. Weiterhin können in den voneinander abgewandten Endbereichen der Profilstäbe Schrauben angeordnet sein und dazwischen Stifte, wobei sowohl Schrauben als auch Stifte in die Befestigungsplatten eingreifen. Dadurch ist es auf einfache Weise möglich, herstellungsbedingte Schwankungen in der Breite der Befestigungsplatten auszugleichen.

Weitere Vorteile und vorteilhafte Weiterbildungen der erfindungsgemäßen Vorrichtung zum Befestigen von Bauelementen ergeben sich aus den Unteransprüchen und der Beschreibung.

Ein Ausführungsbeispiel der Erfindung ist in der Zeichnung dargestellt und in der nachfolgenden Beschreibung näher erläutert. Es zeigen
- Figur 1: eine Vorderansicht einer Vorrichtung zum Befestigen von Bauelementen in Explosionsdarstellung,
- Figur 2: eine Draufsicht der Vorrichtung nach Figur 1 in Explosionsdarstellung,
- Figur 3: eine Vorderansicht einer Abwandlung der Vorrichtung nach Figur 1 in Explosionsdarstellung und
- Figur 4: eine Draufsicht auf die Vorrichtung nach Figur 2 in Explosionsdarstellung.

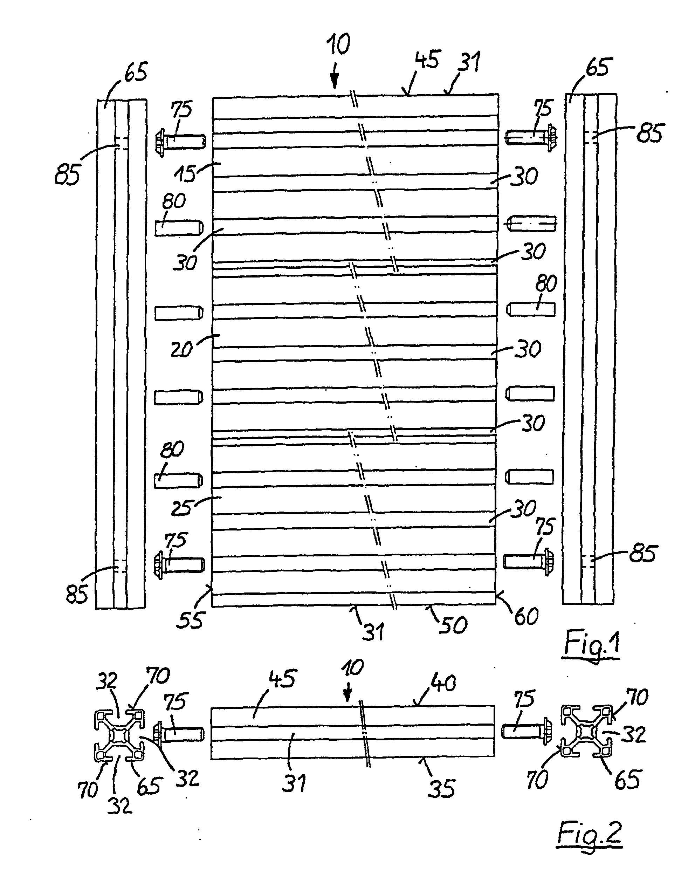

Die Figuren 1 und 2 zeigen eine Vorrichtung 10 zum Befestigen von Bauelementen. Drei gleich lange aneinandergereihte im Aluminium-Strangpreßverfahren hergestellte Befestigungsplatten 15, 20, 25 weisen parallele und in gleichmäßigen Abständen angeordnete hinterschnittene Nuten 30 auf. Die Nuten 30 dienen der Befestigung von Bauelementen, insbesondere Pneumatikelementen für Schulungszwecke. Die Nuten 30 sind in der Vorderseite 35 und der Rückseite 40 der Befestigungsplatten 15, 20, 25 ausgebildet. In den Nuten 30 sind Befestigungsmittel anordenbar, mit denen die Bauelemente verankert werden. Die voneinander abgewandten Längsseiten 45 und 50 der beiden äußeren Befestigungsplatten 15 und 25 weisen ebenfalls je eine hinterschnittene Nut 31 auf. Es ist auch möglich an allen Längsseiten der einzelnen Befestigungsplatten 15, 20, 25 Nuten 31 auszubilden, um Verbindungsmittel einzufügen. Die Stirnseiten 55 und 60 der Befestigungsplatten 15, 20, 25 schließen bündig aneinander an.

Die Befestigungsplatten 15, 20, 25 sind zwischen zwei im Querschnitt quadratischen Profilstäben 65 angeordnet. Die Profilstäbe 65 weisen mittig in jeder Längsseite 70 längs verlaufende hinterschnittene Nuten 32 auf. In den Nuten 32, die den Befestigungsplatten 15, 20, 25 jeweils zugewandt sind, sind Schrauben 75 mit Innensechskant und Stifte 80 angeordnet. In der mittleren Befestigungsplatte 20 sind in jeder Stirnseite 55, 60 zwei Stifte 80 im Eingriff. Die beiden äußeren Befestigungsplatten 15, 25 sind an jeder Stirnseite mit einer Schraube 75 und einem Stift 80 verankert, wobei die Schrauben 75 an den äußeren Enden der Profilstäbe angeordnet sind. Fluchtend mit den Schrauben 75 sind in den Profilstäben 65 Querbohrungen 85 ausgebildet, um einen Schraubenschlüssel zur Befestigung der Schrauben 75 hindurchführen zu können. Die Stifte 80 haben in den Befestigungsplatten 15, 20, 25 einen Preßsitz.

Beim Zusammenbau der Vorrichtungen 10 werden zuerst die Befestigungsplatten 15, 20, 25 auf das gewünschte Maß abgelängt. Dann werden sie nebeneinander angeordnet und die sich ergebende Länge gemessen. Anschließend werden die Profilstäbe 65 auf diese Länge zugesägt. Zum einen ist dies erforderlich, da die Profilstäbe 65 bündig mit den Befestigungsplatten 15, 20, 25 abschließen müssen und die einzelnen Befestigungsplatten 15, 20, 25, durch das Aluminium-Strangpreßverfahren bedingt, sehr in der Breite schwanken. Zum andern müssen die Querbohrungen 85 mit den anzubringenden Schrauben 75 fluchten, damit ein Schraubenschlüssel zum Anziehen der Schrauben 75 durchgeführt werden kann. Nachdem die Profilstäbe abgelängt sind, werden mit Hilfe einer Bohrlehre, die jeweils an den Enden der Profilstäbe 65 angelegt und fixiert wird, die Querbobrungen 85 an der richtigen Stelle gebohrt.

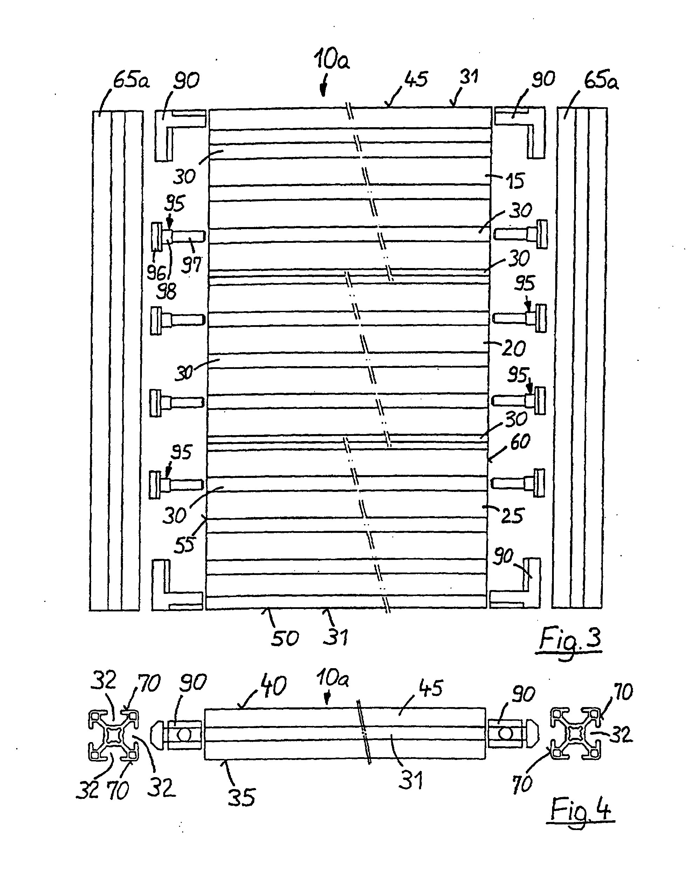

In den Figuren 3 und 4 ist eine abgewandelte Vorrichtung 10a abgebildet, die anstelle von Schrauben 75 und Stiften 80 Befestigungswinkel 90 und Hammerstifte 95 aufweist. Jeweils ein Befestigungswinkel 90 ist gleichzeitig in der den Befestigungsplatten 15, 20, 25 zugewandten Nut 32 eines Profilstabes 65a und in der Nut 30 der Längsseite 45 oder in der Nut 31 der Längsseite 50 verankert.

Die Hammerstifte 95 sind Stifte, deren eines Ende als Nutenstein 96, ähnlich der von Hammerschrauben, geformt ist. Der in den Stirnseiten 55, 60 eingreifende Bolzen 97 der Hammerstifte hat dort einen Preßsitz. Am Nutenstein 96 des Hammerstiftes 95 kann der Bolzen 97 direkt ansetzen, oder ein Bund 98 angeformt sein, so wie in der Figur 3 dargestellt, der der besseren Zentrierung in der Nut 32 dient.

Die Befestigungswinkel 90 können in den Nuten 31, 32 beispielsweise einen Preßsitz haben. Sie können aber auch in jedem Schenkel eine durchgehende Gewindebohrung aufweisen, in die ein Gewindestift geschraubt wird. Drückt dieser mit seiner Spitze gegen den Nutgrund einer Nut 31, 32, so ist der Befestigungswinkel 90 fixiert.

Der Zusammenbau der Vorrichtung 10a erfolgt so wie der Zusammenbau der Vorrichtung 10, mit dem Unterschied, daß die Querbohrungen 85 entfallen.

Die Schrauben 75, die Stifte 80 und die Hammerstifte 95, die in die Stirnseiten 55, 60 der Befestigungsplatten 15, 20, 25 greifen, können je nach Ausführung der Befestigungsplatten 15, 20, 25 in dort schon bei der Herstellung ausgebildeten Schraubkanälen oder nachträglich angebrachten Bohrungen verankert werden. Die Schrauben 75 sind Schrauben mit selbstschneidendem Gewinde. Es ist jedoch auch denkbar, zuerst Gewinde zu schneiden und dann Schrauben mit beispielsweise metrischem Gewinde zu montieren. Die Stifte 80 und die Hammerstifte 95 werden wegen des Preßsitzes in die Stirnseiten 55, 60 eingeschlagen.

Der Vorteil der sich durch die Verwendung der Stifte 80 und der Hammerstifte 95 ergibt ist, daß toleranzbedingte Schwankungen der Breiten der einzelnen Befestigungsplatten 15, 20, 25 ausgeglichen werden können. Würden statt der Stifte 80 oder Hammerstifte 95 Schrauben 75 verwendet, müßten zu deren Befestigung Querbohrungen 85 in die Profilstäbe 65, 65as eingebracht werden. Um diese jedoch maßgenau zu bohren, müßten die Befestigungsplatten 15, 20, 25 erst aufwendig vermessen werden und dann zusätzlich die Querbohrungen 85 angebracht werden. Dieser zusätzliche Aufwand entfällt bei der Verwendung der Stifte 80 oder Hammerstifte 95 gänzlich.

## Patentansprüche

1. Vorrichtung (10; 10a), auf der Bauelemente, insbesondere Pneumatikelementen, befestigbar sind, bestehend aus Befestigungsplatten (15, 20, 25), die mindestens in einer Plattenoberfläche (35; 40) Nuten (30) zur Befestigung der Bauelemente aufweisen und die ferner Verbindungsmittel zur Verknüpfung mehrerer Befestigungsplatten (15, 20, 25) miteinander hat, wobei die Verbindungsmittel aus Profilelementen (65; 65a) bestehen, die sich zumindest teilweise über die Länge der aneinandergereihten Befestigungsplatten (15, 20, 25) erstrecken, **dadurch gekennzeichnet, daß** die Profilelemente als Profilstäbe (65) ausgebildet sind, die im wesentlichen über die Länge der aneinandergereihten Befestigungsplatten erstrecken und die jeweils mindestens eine längs verlaufende Nut (32) aufweisen, die den Befestigungsplatten (15, 20, 25) zugewandt ist, und daß die Profilstäbe (65) und die Befestigungsplatten (15, 20, 25) mit Hilfe von Fixiermitteln (75, 80, 90, 95), die in den Nuten (32) der Profilstäbe (65) angeordnet sind, miteinander verbunden sind.

2. Vorrichtung nach Anspruch 1, **dadurch gekennzeichnet, daß** einige Fixiermittel als Schrauben (75) und andere als verschiebbare Stiftelemente (80, 95) ausgebildet sind.

3. Vorrichtung nach Anspruch 1 oder 2, **dadurch gekennzeichnet, daß** Schrauben (75) in die beiden äußeren Befestigungsplatten (15, 25) eingreifen.

4. Vorrichtung nach einem der Ansprüche 1 bis 3, **dadurch gekennzeichnet, daß** die Nuten (32) der Profilstäbe (65) einen Hinterschnitt aufweisen und daß Stiftelemente (95) an ihren in den Nuten (32) der Profilstäbe (65) angeordneten Enden als Nutenstein (95) ausgebildet sind.

5. Vorrichtung nach Anspruch 1, **dadurch gekennzeichnet, daß** die Nuten (32) der Profilstäbe (65) einen Hinterschnitt aufweisen, daß die Fixiermittel Befestigungswinkel (90) und Stiftelemente (95) sind, daß die Befestigungswinkel (90) jeweils in eine Nut (32) eines Profilstabes (65) und in eine Nut (31), die an den voneinander abgewandten Längsseiten (45, 50) der beiden äußeren Befestigungsplatten (15, 25) ausgebildet ist, eingreifen und daß die Stiftelemente (95) an ihren in den Nuten (32) der Profilstäbe (65) angeordneten Enden als Nutenstein (96) ausgebildet sind.

## Claims

1. Apparatus (10; 10a) on which components, in particular pneumatic elements can be fastened, comprising fastening panels (15, 20, 25) which, at least in one panel surface (35; 40), have grooves (30) for fastening the components and which also have connecting means for linking a plurality of fastening panels (15, 20, 25) to one another, the connecting means comprising profile elements (65; 65a) which at least partially extend over the length of the fastening panels (15, 20, 25) lined up in a row one beside the other, **characterized in that** the profile elements are designed as profile bars (65) which extend essentially over the length of the fastening panels lined up in a row one beside the other and which each have at least one longitudinally running groove (32) which is directed towards the fastening panels (15, 20, 25), and **in that** the profile bars (65) and the fastening panels (15, 20, 25) are connected to one another with the aid of fixing means (75, 80, 90, 95) which are arranged in the grooves (32) of the profile bars (65).

2. Apparatus according to Claim 1, **characterized in that** some fixing means are designed as screws (75) and others are designed as displaceable pin elements (80, 95).

3. Apparatus according to Claim 1 or 2, **characterized in that** screws (75) engage in the two outer fastening panels (15, 25).

4. Apparatus according to one of Claims 1 to 3, **characterized in that** the grooves (32) of the profile bars (65) have an undercut, and **in that** pin elements (95) are designed as a sliding block (96) at their ends which are arranged in the grooves (32) of the profile bars (65).

5. Apparatus according to Claim 1, **characterized in that** the grooves (32) of the profile bars (65) have an undercut, **in that** the fixing means are fastening angles (90) and pin elements (95), **in that** the fastening angles (90) each engage in a groove (32) of a profile bar (65) and in a groove (31) which is formed on the longitudinal sides (45, 50) of the two outer fastening panels (15, 25), said longitudinal sides being directed away from one another, and **in that** the pin elements (95) are formed as a sliding block (96) at their ends which are arranged in the grooves (32) of the profile bars (65).

## Revendications

1. Dispositif (10; 10a) sur lequel peuvent se fixer des composants, notamment des éléments pneumatiques, formé de plaques de fixation (15, 20, 25) ayant des rainures (30) réalisées dans au moins une surface de plaque (35 ; 40) pour fixer les composants et qui ont de plus des moyens de liaison pour combiner plusieurs plaques de fixation (15, 20, 25), les moyens de liaison étant des éléments profilés (65; 65a) s'étendant au moins en partie sur la longueur des plaques de fixation (15, 20, 25) juxtaposées,
**caractérisé en ce que**
les éléments profilés sont des barres profilées (65) s'étendant essentiellement sur la longueur des plaques de fixation juxtaposées et qui ont chaque fois au moins une rainure (32) longitudinale, tournée vers les plaques de fixation (15, 20, 25) et
les profilés (65) et les plaques de fixation (15, 20, 25) sont reliés à l'aide de moyens de fixation (75, 80, 90, 95) prévus dans les rainures (32) des profilés (65).

2. Dispositif selon la revendication 1,
**caractérisé en ce que**
quelques moyens de fixation sont des vis (75) et les autres des éléments en forme de broches (80, 95) coulissantes.

3. Dispositif selon l'une quelconque des revendications 1 ou 2,
**caractérisé en ce que**
les vis (75) pénètrent dans les deux plaques de fixations extérieures (15, 25).

4. Dispositif selon l'une quelconque des revendications 1 à 3,
**caractérisé en ce que**
les rainures (32) des profilés (65) ont une partie en contre-dépouille et les éléments en forme de broches (95) sont réalisés comme des galets à rainures (96) à leurs extrémités prévues dans les rainures (32) des profilés (65).

5. Dispositif selon la revendication 1,
**caractérisé en ce que**
les rainures (32) des profilés (65) ont une contre-dépouille,
les moyens de fixation sont des cornières de fixation (90) et des broches (95),
la cornière de fixation (90) vient chaque fois dans une rainure (32) d'un profilé (65) et dans une rainure (31) prévue sur les grands côtés opposés les uns aux autres (45, 50) des deux plaques de fixations extérieures (15, 25) et
les éléments en forme de broches (95) sont réalisés comme des galets à rainures (96) à leurs extrémités prévues dans les rainures (32) des profilés (65).
